# EUROPEAN PATENT SPECIFICATION

(11) **EP 0 823 064 B1**
(45) Date of publication and mention of the grant of the patent: **02.06.2004**
(21) Application number: 95918297.3
(22) Date of filing: 28.04.1995
(51) Int. Cl.: G02B 7/10

(54) **MICROSCOPE LENS GUIDE SYSTEM**
VORRICHTUNG ZUR FÜHRUNG VON MIKROSKOPLINSEN
SYSTEME DE GUIDAGE DES LENTILLES D'UN MICROSCOPE

(43) Date of publication of application: 11.02.1998
(73) Proprietor: Leica Microsystems Inc., Depew, NY 14043 (US)
(72) Inventor: PARKS, Scott, Cheektowaga, NY 14225 (US)
(74) Representative: Reichert, Werner F., Dr.
(86) International application number: PCT/US1995/005093
(87) International publication number: WO 1996/034306

(56) References cited:
- EP-A- 0 620 463
- US-A- 3 405 991
- US-A- 4 650 296
- US-A- 5 241 422

## Description

### BACKGROUND OF THE INVENTION

Prior art microscopes having continuously variable magnification systems typically utilize a zoom adjustment mechanism whereby a pair of lenses may be moved relative to each other along an optical axis of the microscope. Where the microscope is a stereomicroscope, complementary (i.e. left and right) lens pairs may be moved along converging optical axes by the zoom adjustment mechanism. In several prior art stereomicroscopes, the lens pairs are held by lens cell carriers which are mounted for movement along guide rods supported by a frame. Movement of the carriers may be accomplished using dual cam slots formed in the guide rods or in a central cam shaft and coupled to a cam follower on each carrier, whereby rotation of the cammed rod or rods via an adjustment knob connected to such rod or rods by a gear train causes the carriers to move along the guide rods. Examples of such prior art devices are disclosed in U.S. Patents Nos. 3,060,801 and 3,510,202 to Boughton, U.S. Patent No. 3,405,991 to Seedhouse and U.S. Patent No. 4,650,296 to Tsuchiya. An alternate mechanism for movement of the lens carriers employing a crank and linkage configuration is disclosed in commonly owned U.S. Patent No. 4,690,519 to Clark et al.

In order that the lenses of a microscope remain aligned along the optical axis during zoom adjustment motion, it is desirable to mount the lens carriers on a first guide rod and bias a portion of each carrier for engagement with a second guide rod to constrain rotation of the carrier relative to the first guide rod. Typically, biasing means comprises a mechanical spring having one end mounted on the lens carrier and another end mounted on a separate component movable with the carrier, such as a complementary lens carrier in a stereomicroscope. Fig. 1 illustrates.a prior art construction disclosed in U.S. Patent No. 4,690,519, wherein a complementary pair of lens carriers 1a and 1b are mounted on guide rods 2 and 3, respectively, and a horseshoe spring 4 extending between the carriers exerts a biasing force on each carrier such that carrier arm portions 5 and 6 engage the guide rod on which the complementary carrier is mounted, thereby limiting rotational motion of the carriers.

The EP-A-0 620 463 teaches a system for guiding a lens carrier 10 along a pair of parallel guide rods 4 and 6. The lens carrier 10 includes a pair of opposing ball bearings 14, 16, one of which is spring loaded, for enabling guided travel along guide rod 6. A magnet assembly 12 having an "U-"shaped permanent magnet 20 is used to bias a series of indirectly opposite ball bearing pairs 22, 28 and 24, 26 for engagement with the other guide rod 4. The system of this document is designed to provide accurate guidance for heavier lenses than are found in a microscope, such as zoom lenses in a motion picture camera. It is also designed to accommodate a wider range of thermal expansion than would normally be experienced in the use of a microscope. Therefore, the system of this state of the art relies on ball bearings rather than surface-to-surface sliding between the lens carrier and guide rods, and avoids the use of a close tolerance through-bore for receiving guide rod 6.

### SUMMARY OF THE INVENTION

The present invention generally relates to microscopes, and more particularly to lens guide systems for microscopes utilizing magnetic biasing means.

It is an object of the present invention to provide an improved lens guide system for a microscope wherein lens carriers of the system are biased for engagement with a guide rod using magnetic biasing means.

Another object of the present invention is to provide a microscope lens guide system with biasing means which exerts a constant force on the lens carriers of the microscope through their entire range of travel along an optical axis.

A further object of the present invention is to provide a microscope with a lens guide system which is less reliant on mechanical biasing means, thereby making the microscope simpler to assemble and more durable than prior art microscopes.

The invention relates to a variable power optical instrument according to claim 1 and a lens carrier according to claim 10.

### BRIEF DESCRIPTION OF THE DRAWINGS

The nature and mode of operation of the present invention will now be more fully described in the following detailed description taken with the accompanying drawings wherein:
Fig. 2 is a rear view of a microscope lens guide system incorporating magnetically biased lens carriers in accordance with a first embodiment of the present invention;
Fig. 3 is a sectional view taken along line 3-3 in Fig. 2;
Fig. 4 is a sectional view taken along line 4-4 in Fig. 3;
Fig. 5 is a top view of a lens carrier and guide rods formed in accordance with a second embodiment of the present invention; and
Fig. 6 is a side view thereof.

### DETAILED DESCRIPTION

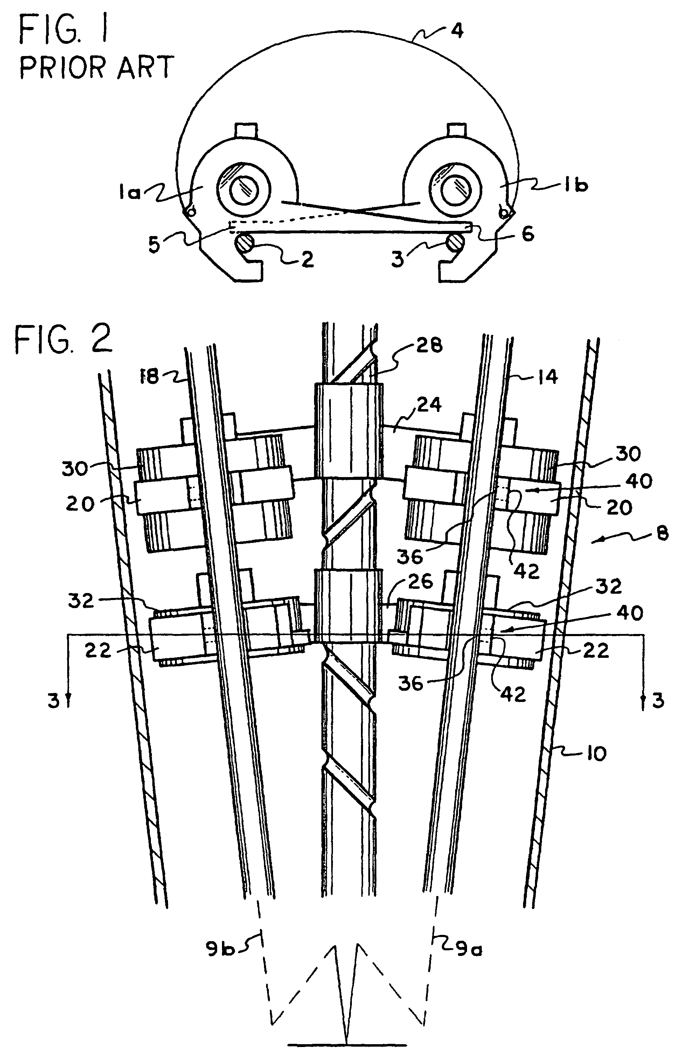

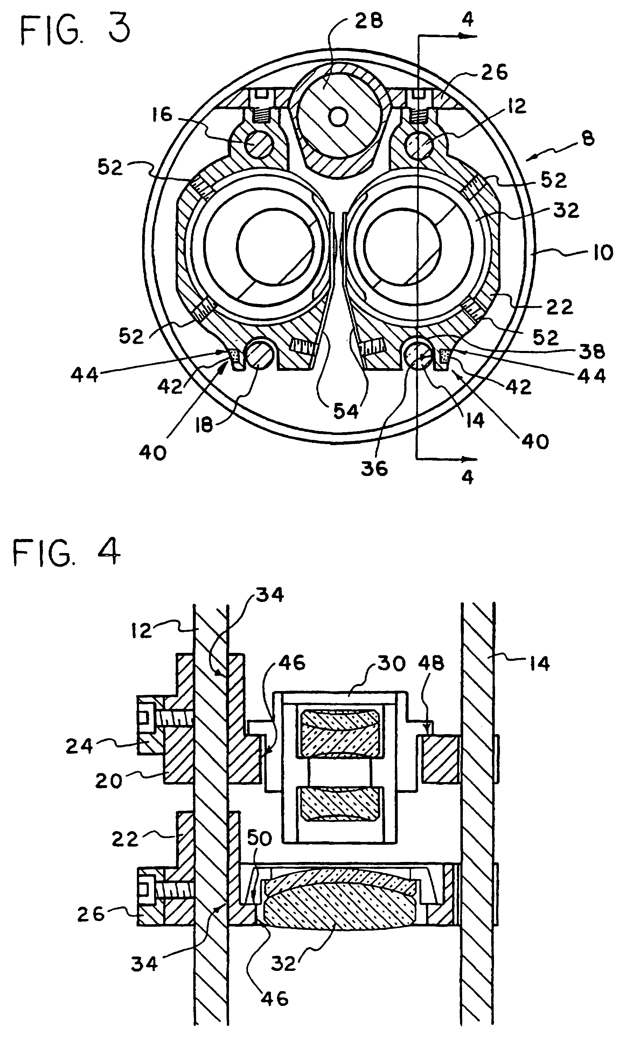

Referring to Figs. 2-4, a first embodiment stereomicroscope 8 having converging optical axes 9a and 9b is shown as generally including a frame 10 for supporting a first pair of parallel guide rods 12 and 14 and a second pair of parallel guide rods 16 and 18, each pair of guide rods having an upper lens carrier 20 and a lower lens carrier 22 slidably connected thereto. Upper lens carriers 20 are connected to an upper cam follower 24 and lower lens carriers 22 are connected to a lower cam follower 26, with the upper and lower cam followers being mounted for cooperation with dual cam shaft 28. Zoom adjustment means (not shown) are provided for rotating cam shaft 28 to move upper and lower lens carriers 20 and 22 in a predetermined manner in relation to each other to continuously vary the magnification power of stereomicroscope 8. Alternatively, zoom adjustment means may include a crank and link mechanism, such as that taught by commonly owned U.S. Patent No. 4,690,519 to clark et al.

The purpose of guide rods 12 and 14 and lens carriers 20 and 22 connected thereto is to ensure necessary rectilinear motion of an upper lens 30 and a lower lens 32 along optical axis 9a when the zoom is adjusted. Guide rods 16 and 18 serve a similar and complementary purpose with respect to optical axis 9b, however the invention is described below solely as it relates to optical axis 9a for sake of simplicity. In order to ensure the necessary rectilinear motion, guide rods 12 and 14 are secured in a conventional fashion at each end thereof to frame 10, such that the guide rods are parallel to each other and to optical axis 9a. Lens carriers 20 and 22 are provided with a passage 34 through a first portion thereof for receiving guide rod 12. In the first embodiment, passage 34 is an elongated through hole preferably formed to close tolerances to accommodate guide rod 12 in surface-to-surface fit. Elongation of passage 34 is desirable to provide a suitably large length-to-diameter ratio, thereby allowing lens carriers 20 and 22 to slide along guide rod 12 with minimal wobble, i.e. movement along or rotation about a transverse axis of guide rod 12 due to slight clearance between guide rod 12 and the inner surface of passage 34.

Upper and lower lens carriers 20 and 22 each include an abutment surface 36 at a second portion thereof, such as a surface of a slot 38 formed therein, and magnetic biasing means 40 for biasing abutment surface 36 for engagement with guide rod 14 to prevent rotation of the lens carrier about the longitudinal axis of guide rod 12. Biasing means 40 preferably comprises a magnet 42 held within a recess 44 proximate abutment surface 36 for magnetic attraction to guide rod 14, which is formed of a suitable magnetic material, i.e. a material to which magnet 42 is magnetically attracted, such as a magnetic stainless steel. Magnet 42 is completely supported by the lens carrier which it serves to bias, enabling the lens carrier to function independently and without a separate component for mounting the other end of a mechanical spring, as required by the prior art. It may be appreciated that biasing means 40 of the present invention reduces the need for mechanical springs as employed by the prior art, thereby simplifying assembly of the instrument and improving its reliability and durability. An additional advantage of biasing means 40 is that it exerts a constant biasing force for engaging the lens carriers with guide rod 14 throughout the entire range of travel of each lens carrier along guide rods 12 and 14, resulting in a more uniform force to be applied by a user to zoom adjustment means (not shown), which may include a rotational knob. With prior art constructions having mechanical springs supported by complementary lens carriers, the biasing force exerted by the mechanical spring is non-uniform due to converging and diverging motion of the complementary lens carriers relative to each other.

Upper and lower lens carriers 20 and 22 additionally include view openings 46 through a third portion thereof, and support surfaces 48 and 50 for supporting upper and lower lenses 30 and 32, respectively. The lenses may be located and secured within view openings 46 by suitable means, which may include radially adjustable set screws 52 provided in the carrier and a retainer spring 54 attached to the carrier.

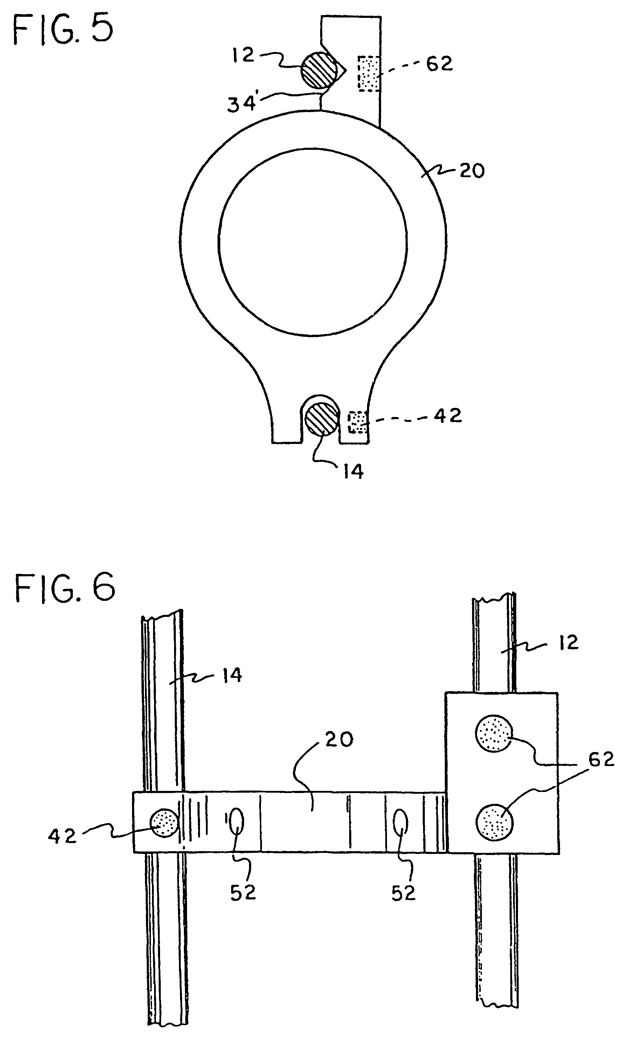

Figs. 5 and 6 illustrate a second embodiment of the present invention wherein guide rod 12 is slidably held within a passage 34', preferably in the form of a V-shaped groove through upper lens carrier 20, by a pair of magnets 62 situated proximate magnetic guide rod 12 and spaced in the direction of the longitudinal axis of guide rod 12. A similar arrangement may be employed for each lens carrier, including lower lens carrier 22. Thus, in the second embodiment, magnets are used proximate both guide rods for biasing the lens carriers for engagement with the guide rods, thereby minimizing wobble and preventing rotation of the lens carriers to provide smooth rectilinear motion of the lens carriers along the guide rods.

## Claims

1. A variable power optical instrument of the type comprising:
support means (10);
a first optical axis (9a) and a second optical axis (9b) converging relative to said first optical axis;
a first plurality of lens carriers (20 and 22) each adapted to support a lens (30 and 32) and position said lens along said first optical axis (9a) and a second plurality of lens carriers (20 and 22) each adapted to support a lens (30 and 32) and position said lens along said second optical axis (9b), each of said lens carriers having a passage (34, 34') through a first portion thereof and a slot (36) through a second portion thereof;
a first pair of spaced guide rods (12 and 14) secured to said support means, one of said first pair of guide rods (12) received in close slidable fit within said passage (34) of each of said first plurality of lens carriers, and another of said first pair of guide rods (14) being received with clearance within said slot (38) of each of said first plurality of lens carriers;
a second pair of spaced guide rods (16 and 18) secured to said support means, one of said second pair of guide rods (16) being received in close slidable fit within said passage (34) of each of said second plurality of lens carriers, and another of said second pair of guide rods (18) being received with clearance within said slot (38) of each of said second plurality of lens carriers; and
zoom adjustment means secured to said support means for moving said first plurality of lens carriers along said first optical axis and said second plurality of lens carriers along said second optical axis;
**characterized in that**:
another of said first pair of guide rods (14) and another of said second pair of guide rods (18) are made of a magnetic material; and
each of said first plurality of lens carriers having a recess (44) receiving a magnet (42) proximate to said slot (38) thereof for magnetically biasing an abutment surface (36) of said slot against said another of said first pair of guide rods (14) to prevent rotation of said lens carrier about said one of said first pair of guide rods (12) while permitting sliding motion between said abutment surface (36) and said another of said first pair of guide rods (14), and each of said second plurality of lens carriers having a recess (44) receiving a magnet (42) proximate to said slot (38) thereof for magnetically biasing an abutment surface (36) of said slot against said another of said second pair of guide rods (18) to prevent rotation of said lens carrier about said one of said second pair of guide rods (12) while permitting sliding motion between said abutment surface (36) and said another of said second pair of guide rods (14).
each of said lens carriers being integrally formed from a unitary piece of material.

2. An instrument according to claim 1, wherein said zoom adjustment means includes a crank and link mechanism.

3. An instrument according to claim 1, wherein said zoom adjustment means includes a cam shaft (28).

4. An instrument according to claim 1, wherein said guide rods (14, 18) are formed of magnetic stainless steel.

5. An instrument according to claim 3, wherein said guide rods (14, 18) are formed of magnetic stainless steel.

6. The variable power optical instrument according to claim 1,
**characterized in that**:
each of said first plurality of lens carriers has a pair of magnets (62) proximate to said passage (34') thereof for magnetically biasing said passage to engage said one of said first pair of guide rods (12), and each of said second plurality of lens carriers has a pair of magnets (62) proximate to said passage (34') thereof for magnetically biasing said passage to engage said one of said second pair of guide rods (16).

7. An instrument according to claim 6, wherein said zoom adjustment means includes a crank and link mechanism.

8. An instrument according to claim 6, wherein said zoom adjustment means includes a cam shaft (28).

9. An instrument according to claim 8, where said guide rods (12, 14, 16, 18) are formed of magnetics stainless steel.

10. A lens carrier (20) for use in a variable power optical instrument said lens carrier being of the type comprising:
A first portion having a passage (34) formed therethrough for slidably receiving a first guide rod (12);
a second portion having an abutment surface (36) for slidably engaging a second guide rod (14);
a third portion having a view opening (46) therethrough; and
means (48, 50, 52, 54) to support and locate a lens cell (30, 32) within said view opening (46);
**characterized in that**:
said second portion includes a recess (44) and a magnet (42) held by said recess proximate said abutment surface (36) for biasing said abutment surface (36) toward surface-to-surface sliding engagement with said second guide rod (14);
said first second and third portions are integrally formed from a unitary piece of material.

11. A lens carrier according to claim 10, wherein said passage (34) is an elongated through hole.

12. A lens carrier according to claim 10, wherein said abutment surface (36) is biased for engagement with said second guide rod (14) solely by said magnet (42).

13. A lens carrier according to claim 10, wherein said first portion includes at least one magnet (62) proximate said passage (34) for biasing said passage (34) for engagement with said guide rod (12).

14. A lens carrier according to claim 13, wherein said at least one magnet is a pair of magnets (62) spaced in the axial direction of said passage (34).

15. A lens carrier according to claim 13, wherein said passage is a V-shaped groove (34').

16. A lens carrier according to claim 15, wherein said at least one magnet is a pair of magnets (62) spaced in the axial direction of said groove (34').

17. A lens carrier according to claim 16, wherein said groove (34') is biased for engagement with said first guide rod (12) solely by said pair of magnets (62).)

## Patentansprüche

1. Optisches Instrument mit veränderlicher Leistung von dem Typ, der folgendes aufweist:
Stützmittel (10);
eine erste optische Achse (9a) und eine relativ zu der ersten optischen Achse konvergierende zweite optische Achse (9b);
eine erste Mehrheit von Objektivhalterungen (20 und 22), die jeweils dafür ausgelegt sind, ein Objektiv (30 und 32) zu halten und das Objektiv entlang der ersten optischen Achse (9a) zu positionieren, und eine zweite Mehrheit von Objektivhalterungen (20 und 22), die jeweils dafür ausgelegt sind, ein Objektiv (30 und 32) zu halten und das Objektiv entlang der zweiten optischen Achse (9b) zu positionieren, wobei durch einen ersten Teil jeder der Objektivhalterungen ein Durchgang (34, 34') und durch einen zweiten Teil dieser ein Schlitz (38) verläuft;
wobei ein erstes Paar beabstandeter Führungsstangen (12 und 14) an dem Stützmittel befestigt ist, wobei eine des ersten Paars von Führungsstangen (12) in guter Gleitpassung in dem Durchgang (34) jeder der ersten Mehrheit von Objektivhalterungen aufgenommen ist und eine andere des ersten Paars von Führungsstangen (14) mit Abstand in dem Schlitz (38) jeder der ersten Mehrheit von Objektivhalterungen aufgenommen ist;
ein zweites Paar beabstandeter Führungsstangen (16 und 18), die an dem Stützmittel befestigt sind, wobei eine des zweiten Paars von Führungsstangen (16) in guter Gleitpassung in dem Durchgang (34) jeder der zweiten Mehrheit von Objektivhalterungen aufgenommen ist und eine andere des zweiten Paars von Führungsstangen (18) mit Abstand in dem Schlitz (38) jeder der zweiten Mehrheit von Objektivhalterungen aufgenommen ist und Zoomeinstellmittel, die an dem Stützmittel befestigt sind, um die erste Mehrheit von Objektivhalterungen entlang der ersten optischen Achse und die zweite Mehrheit von Objektivhalterungen entlang der zweiten optischen Achse zu bewegen;
**dadurch gekennzeichnet, daß:**
eine andere des ersten Paars von Führungsstangen (14) und eine andere des zweiten Paars von Führungsstangen (18) aus einem magnetischen Material hergestellt sind und
jede der ersten Mehrheit von Objektivhalterungen in der Nähe ihres Schlitzes (38) einen einen Magneten (42) aufnehmenden Schlitz (44) zum Vormagnetisieren einer Anschlagsfläche (36) des Schlitzes gegen die andere des ersten Paares von Führungsstangen (14) aufweist, um eine Drehung der Objektivhalterung um die eine des ersten Paars von Führungsstangen (12) zu verhindern und gleichzeitig eine Gleitbewegung zwischen der Anschlagsfläche (36) und der anderen des ersten Paars von Führungsstangen (14) zu gestatten und jede der zweiten Mehrheit von Objektivhalterungen in der Nähe ihres Schlitzes (38) einen einen Magneten (42) aufnehmenden Schlitz (44) zum Vormagnetisieren einer Anschlagsfläche (36) des Schlitzes gegen die andere des zweiten Paares von Führungsstangen (18) aufweist, um eine Drehung der Objektivhalterung um die eine des zweiten Paars von Führungsstangen (12) zu verhindern und gleichzeitig eine Gleitbewegung zwischen der Anschlagsfläche (36) und der anderen des zweiten Paars von Führungsstangen (14) zu gestatten, wobei jede der Objektivhalterungen integral aus einem unitären Materialstück ausgebildet ist.

2. Instrument nach Anspruch 1, wobei das Zoomeinstellmittel einen Kurbel- und Gestänge-Mechanismus enthält.

3. Instrument nach Anspruch 1, wobei das Zoomeinstellmittel eine Nockenwelle (28) enthält.

4. Instrument nach Anspruch 1, wobei die Führungsstangen (14, 18) aus magnetischem rostfreiem Stahl ausgebildet sind.

5. Instrument nach Anspruch 3, wobei die Führungsstangen (14, 18) aus magnetischem rostfreiem Stahl ausgebildet sind.

6. Optisches Instrument mit veränderlicher Leistung nach Anspruch 1, **dadurch gekennzeichnet, daß**:
jede der ersten Mehrheit von Objektivhalterungen in der Nähe ihres Durchgangs (34') ein Paar Magnete (62) zum Vormagnetisieren des Durchgangs aufweist, um eine des ersten Paars von Führungsstangen (12) in Eingriff zu nehmen, und jede der zweiten Mehrheit von Objektivhalterungen in der Nähe ihres Durchgangs (34') ein Paar Magnete (62) zum Vormagnetisieren des Durchgangs aufweist, um die eine des zweiten Paars von Führungsstangen (16) in Eingriff zu nehmen.

7. Instrument nach Anspruch 6, wobei das Zoomeinstellmittel einen Kurbel- und Gestänge-Mechanismus enthält.

8. Instrument nach Anspruch 6, wobei das Zoomeinstellmittel eine Nockenwelle (28) enthält.

9. Instrument nach Anspruch 8, wobei die Führungsstangen (12, 14, 16, 18) aus magnetischem rostfreiem Stahl ausgebildet sind.

10. Objektivhalterung (20) zur Verwendung in einem optischen Instrument mit veränderlicher Leistung, wobei die Objektivhalterung von dem Typ ist, der folgendes aufweist:
einen ersten Teil mit einem darin ausgebildeten Durchgang (34) zum gleitenden Aufnehmen einer ersten Führungsstange (12);
einem zweiten Teil mit einer Anschlagsfläche (36) zur gleitenden Ineingriffnahme einer zweiten Führungsstange (14);
einen dritten Teil mit einer Sichtöffnung (46) dorthindurch und
Mittel (48, 50, 52, 54) zum Stützen und Positionieren einer Objektivzelle (30, 32) in der Sichtöffnung (46);
**dadurch gekennzeichnet, daß:**
der zweite Teil einen Schlitz (44) und einen von dem Schlitz gehaltenen Magneten (42) in der Nähe der Anschlagfläche (36) zum Vorbeanspruchen der Anschlagfläche (36) in Richtung auf eine Oberfläche-zu-Oberfläche-Gleitineingriffnahme mit der zweiten Führungsstange (14) enthält;
wobei der erste, zweite und dritte Teil integral aus einem unitären Materialstück ausgebildet sind.

11. Objektivträger nach Anspruch 10, wobei der Durchgang (34) ein längliches Durchgangsloch ist.

12. Objektivträger nach Anspruch 10, wobei die Anschlagfläche (36) lediglich durch den Magneten (42) zur Ineingriffnahme mit der zweiten Führungsstange (14) vorbeansprucht wird.

13. Objektivträger nach Anspruch 10, wobei der erste Teil mindestens einen Magneten (62) in der Nähe des Durchgangs (34) zum Vorbeanspruchen des Durchgangs (34) zur Ineingriffnahme mit der Führungsstange (12) enthält.

14. Objektivträger nach Anspruch 13, wobei es sich bei dem mindestens einen Magneten um ein Paar von Magneten (62) handelt, die in der axialen Richtung des Durchgangs (34) beabstandet sind.

15. Objektivträger nach Anspruch 13, wobei der Durchgang eine V-förmige Nut (34') ist.

16. Objektivträger nach Anspruch 15, wobei es sich bei dem mindestens einen Magneten um ein Paar von Magneten (62) handelt, die in der axialen Richtung der Nut (34') beabstandet sind.

17. Objektivträger nach Anspruch 16, wobei die Nut (34') lediglich durch das Paar Magnete (62) zur Ineingriffnahme mit der ersten Führungsstange (12) vorbeansprucht wird.

## Revendications

1. Instrument optique à puissance variable du type comprenant :
un moyen de support (10) ;
un premier axe optique (9a) et un deuxième axe optique (9b) convergeant par rapport audit premier axe optique ;
une première pluralité de porte-lentille (20 et 22), chacun apte à supporter une lentille (30 et 32) et à placer ladite lentille le long dudit premier axe optique (9a) et une deuxième pluralité de porte-lentille (20 et 22), chacun apte à supporter une lentille (30 et 32) et à placer ladite lentille le long dudit deuxième axe optique (9b), chacun desdits porte-lentille comportant une première portion traversée par un passage (34, 34') et une deuxième portion traversée par une encoche (38) ;
une première paire de tiges de guidage espacées (12 et 14) fixées audit moyen de support, une de ladite première paire de tiges de guidage (12) étant reçue en ajustement coulissant serré à l'intérieur dudit passage (34) de chacun de ladite première pluralité de porte-lentille, et une autre de ladite première paire de tiges de guidage (14) étant reçue avec un jeu à l'intérieur de ladite encoche (38) de chacun de ladite première pluralité de porte-lentille ;
une deuxième paire de tiges de guidage espacées (16 et 18) fixées audit moyen de support, une de ladite deuxième paire de tiges de guidage (16) étant reçue en ajustement coulissant serré à l'intérieur dudit passage (34) de chacun de ladite deuxième pluralité de porte-lentille, et une autre de ladite deuxième paire de tiges de guidage (18) étant reçue avec un jeu à l'intérieur de ladite encoche (38) de chacun de ladite deuxième pluralité de porte-lentille ; et
un moyen de réglage de zoom fixé audit moyen de support pour déplacer ladite première pluralité de porte-lentille le long dudit premier axe optique et ladite deuxième pluralité de porte-lentille le long dudit deuxième axe optique ;
**caractérisé en ce que**
une autre de ladite première paire de tiges de guidage (14) et une autre de ladite deuxième paire de tiges de guidage (18) sont constituées d'un matériau magnétique ; et
chacun de ladite première pluralité de porte-lentille comportant un renfoncement (44) recevant un aimant (42) à proximité de sa dite encoche (38) pour pousser magnétiquement une surface de butée (36) de ladite encoche contre une dite autre de ladite première paire de tiges de guidage (14) pour empêcher la rotation dudit porte-lentille autour de ladite une de ladite première paire de tiges de guidage (12) tout en permettant le mouvement coulissant entre ladite surface de butée (36) et une dite autre de ladite première paire de tiges de guidage (14), et chacun de ladite deuxième pluralité de porte-lentille comportant un renfoncement (44) recevant un aimant (42) à proximité de sa dite encoche (38) pour pousser magnétiquement une surface de butée (36) de ladite encoche contre une dite autre de ladite deuxième paire de tiges de guidage (18) pour empêcher la rotation dudit porte-lentille autour de ladite une de ladite deuxième paire de tiges de guidage (12) tout en permettant le mouvement coulissant entre ladite surface de butée (36) et une dite autre de ladite deuxième paire de tiges de guidage (14), chacun desdits porte-lentille étant formé d'un seul tenant à partir d'un seul morceau de matériau.

2. Instrument selon la revendication 1, dans lequel ledit moyen de réglage de zoom comporte un mécanisme bielle-manivelle.

3. Instrument selon la revendication 1, dans lequel ledit moyen de réglage de zoom comporte un arbre à cames (28).

4. Instrument selon la revendication 1, dans lequel lesdites tiges de guidage (14, 18) sont formées d'acier magnétique inoxydable.

5. Instrument selon la revendication 3, dans lequel lesdites tiges de guidage (14, 18) sont formées d'acier magnétique inoxydable.

6. Instrument optique à puissance variable selon la revendication 1, **caractérisé en ce que** :
chacun de ladite première pluralité de porte-lentille comporte une paire d'aimants (62) à proximité de son dit passage (34') pour pousser magnétiquement ledit passage afin qu'il engage ladite une de ladite première paire de tiges de guidage (12), et chacun de ladite deuxième pluralité de porte-lentille comporte une paire d'aimants (62) à proximité de son dit passage (34') pour pousser magnétiquement ledit passage afin qu'il engage ladite une de ladite deuxième paire de tiges de guidage (16).

7. Instrument selon la revendication 6, dans lequel ledit moyen de réglage de zoom comporte un mécanisme bielle-manivelle.

8. Instrument selon la revendication 6, dans lequel ledit moyen de réglage de zoom comporte un arbre à cames (28).

9. Instrument selon la revendication 8, dans lequel lesdites tiges de guidage (12, 14, 16, 18) sont formées d'acier magnétique inoxydable.

10. Porte-lentille (20) destiné à être utilisé dans un instrument optique à puissance variable, ledit porte lentille étant du type comprenant :
une première portion traversée par un passage (34) pour recevoir de façon coulissante une première tige de guidage (12) ;
une deuxième portion présentant une surface de butée (36) pour engager de façon coulissante une deuxième tige de guidage (14) ;
une troisième portion traversée par une ouverture de visée (46) ; et
un moyen (48, 50, 52, 54) pour supporter et positionner une cellule de lentille (30, 32) dans ladite ouverture de visée (46) ;
**caractérisé en ce que :**
ladite deuxième portion comporte un renfoncement (44) et un aimant (42) maintenu par ledit renfoncement à proximité de ladite surface de butée (36) pour pousser ladite surface de butée (36) vers un engagement coulissant surface/surface avec ladite deuxième tige de guidage (14) ;
lesdites première, deuxième et troisième portions sont formées d'un seul tenant à partir d'un seul morceau de matériau.

11. Porte-lentille selon la revendication 10, dans lequel ledit passage (34) est un trou traversant allongé.

12. Porte-lentille selon la revendication 10, dans lequel ladite surface de butée (36) est poussée pour s'engager avec ladite deuxième tige de guidage (14) uniquement à l'aide dudit aimant (42).

13. Porte-lentille selon la revendication 10, dans lequel ladite première portion comporte au moins un aimant (62) à proximité dudit passage (34) pour pousser ledit passage (34) afin qu'il engage ladite tige de guidage (12).

14. Porte-lentille selon la revendication 13, dans lequel ledit au moins un aimant est une paire d'aimants (62) espacés dans la direction axiale dudit passage (34).

15. Porte-lentille selon la revendication 13, dans lequel ledit passage est une rainure en forme de V (34').

16. Porte-lentille selon la revendication 15, dans lequel ledit au moins un aimant est une paire d'aimants (62) espacés dans la direction axiale de ladite rainure (34').

17. Porte-lentille selon la revendication 16, dans lequel ladite rainure (34') est poussée pour s'engager avec ladite première tige de guidage (12) uniquement à l'aide de ladite paire d'aimants (62).
